# FASCICULE DE BREVET EUROPEEN

(11) **EP 4 412 783 B1**
(45) Date de publication et mention de la délivrance du brevet: **05.11.2025**
(21) Numéro de dépôt: 22797412.8
(22) Date de dépôt: 29.09.2022
(51) Int. Cl.: B22C 7/02, B29C 67/24, B22C 9/08

(54) **PROCEDE AMELIORE DE FABRICATION D'UN MOULE CARAPACE POUR LA FABRICATION DE PIECES METALLIQUES AERONAUTIQUES PAR FONDERIE A CIRE PERDUE ET MOULE CARAPACE ASSOCIÉ**
VERBESSERTES VERFAHREN ZUR HERSTELLUNG EINER SCHALENFORM ZUR HERSTELLUNG VON AERONAUTISCHEN METALLKOMPONENTEN DURCH WACHSVERLUSTGUSS UND ZUGEHÖRIGE SCHALENFORM
IMPROVED METHOD FOR MANUFACTURING A SHELL MOULD FOR THE MANUFACTURE OF AERONAUTICAL METAL COMPONENTS BY LOST-WAX CASTING AND ASSOCIATED SHELL MOLD

(30) Priorité: 07.10.2021 FR 2110619
(43) Date de publication de la demande: 14.08.2024
(73) Titulaire: SAFRAN, 75015 Paris (FR)
(72) Inventeur: LONG, Ming, 75014 PARIS (FR); NIANE, Ngadia Taha, 77550 MOISSY-CRAMAYEL (FR); JOUBERT, Hugues Denis, 77550 MOISSY-CRAMAYEL (FR); HACHANI, Heni, 77550 MOISSY-CRAMAYEL (FR)
(74) Mandataire: Cabinet Beau de Loménie
(86) Numéro de dépôt international: PCT/FR2022/051838
(87) Numéro de publication internationale: WO 2023/057705

(56) Documents cités:
- US-A- 4 356 859
- US-A1- 2015 027 653

## Description

### Domaine Technique

Le présent exposé concerne le domaine de la fabrication de pièces aéronautiques par fonderie, notamment des aubes de turbomachine, selon la technique de la fonderie à la cire perdue. En particulier, le présent exposé concerne un procédé de fabrication d'un moule carapace destiné à la fabrication de pièces de turbomachine selon la technique de la fonderie à la cire perdue.

### Technique antérieure

Des procédés de fonderie dits à cire perdue ou à modèle perdu sont connus, en eux-mêmes, depuis l'Antiquité. Un tel procédé est par exemple décrit dans le document FR3031921, US 4 356 859 et US 2015/027653 divulguent d'autres exemples d'un tel procédé. Ils sont particulièrement adaptés pour la production de pièces métalliques avec des formes complexes. Ainsi, la fonderie à modèle perdu est notamment utilisée pour la production de pales de turbomachines ou de secteurs de roue aubagée. Dans la fonderie à modèle perdu, la première étape est normalement la fabrication d'un modèle en cire, qui comprend généralement la réalisation d'un modèle en matériau à température de fusion comparativement peu élevée, comme par exemple une cire ou résine, autour duquel est ensuite réalisée une carapace en matériau réfractaire.

La fabrication de ce modèle en cire est réalisée par injection dans des outillages spécifiques, par exemple des moules d'injection cire. Plusieurs modèles en cire sont ainsi réalisés puis assemblés de manière à obtenir un modèle pouvant présenter la forme d'une grappe, modélisant un assemblage d'une pluralité de pièces à fabriquer. Après destruction du modèle, le plus souvent par évacuation du matériau du modèle de l'intérieur du moule carapace, donnant son nom à ces procédés, un métal en fusion est coulé dans ce moule carapace, afin de remplir la cavité formée par le modèle dans le moule après son évacuation. Une fois que le métal se refroidit et se solidifie, le moule carapace peut être détruit afin de récupérer une pièce métallique, ou la grappe de pièces métalliques, conforme à la forme du modèle.

Pour réaliser le moule carapace, le modèle en cire est généralement trempé dans une barbotine de fonderie, puis enduit de sables et séché. Ces opérations peuvent être répétées afin de former plusieurs couches et d'obtenir l'épaisseur et la tenue mécanique souhaitées pour le moule carapace.

Le moule carapace obtenu sous forme de grappe présente classiquement plusieurs portions, notamment une pluralité de cavité de moulage destinées chacune à mouler une pièce métallique de la grappe de pièce, un godé d'alimentation par lequel est versé le métal en fusion, un canal central d'alimentation descendant vers le bas de la carapace depuis le godet, et une pluralité de conduits d'alimentation en source permettant d'alimenter chacune des cavités de moulage.

Or, certaines zones de ce moule carapace présentent une fragilité pouvant être source d'inconvénients. En particulier, les conduits d'alimentation en source constituent une zone fragile pour plusieurs raisons. Ces conduits sont fins et courbés, et situés dans une zone de fort gradient thermique. De fortes contraintes lui sont donc appliquées. En phase de préchauffage notamment, la montée en température rapide augmente les gradients thermiques entre les faces interne et externe des conduits d'alimentation, et par conséquent les contraintes/déformations thermiques dans cette zone. Les gradients peuvent atteindre plusieurs dizaines de degrés par millimètre.

Par ailleurs, lors du remplissage, l'alliage liquide y atteint une vitesse importante, induisant des efforts de cisaillement importants pouvant engendrer un arrachement de la carapace et par conséquent des inclusions dans les pièces. En effet, l'alliage liquide peut atteindre dans cette zone des vitesses de l'ordre de 1,5 à 2 m/s, alors que les règles métier fixent une vitesse limite de l'ordre de 0,4 à 0,8 m/s au-delà de laquelle le risque d'arrachement de la carapace est avéré. Enfin, l'obtention d'une carapace d'épaisseur nominale, et donc aux propriétés mécaniques nominales, est difficile en l'état actuel des procédés existants, comprenant le trempage et le stucage.

Compte tenu de ces contraintes, des fissurations peuvent se produire au niveau des conduits d'alimentation en source lors de la coulée du métal en fusion. Ces fissurations peuvent provoquer un épanchement de métal liquide hors de la grappe. Cet épanchement peut dégrader le four, qui doit faire l'objet d'une maintenance pour être de nouveau fonctionnel. En outre, si le volume d'alliage ayant fui est important, le volume des cavités de moulage peut ne pas être rempli complètement, de telle sorte que les pièces finales après solidification peuvent être non conformes.

### Exposé de l'invention

L'objectif du présent exposé est de proposer un procédé de fabrication d'un moule carapace permettant de limiter voire supprimer les inconvénients précités.

Cet objectif est atteint selon le présent exposé grâce à un procédé de fabrication d'un moule carapace destiné à la fabrication par fonderie à cire perdue d'au moins une pièce métallique, notamment de turbomachine, le moule carapace comprenant au moins une cavité de moulage destinée au moulage de la pièce métallique, et au moins un canal d'alimentation destiné à amener un métal liquide vers la cavité de moulage, le procédé comprenant :
- la fabrication d'un modèle en cire comprenant un modèle de pièce destiné à former la cavité de moulage et un modèle de canal d'alimentation destiné à former le canal d'alimentation,
- la disposition d'au moins un insert en céramique autour d'au moins une portion du modèle de canal d'alimentation,
- la fabrication du moule carapace autour du modèle en cire.

Dans certains modes de réalisation, la fabrication du modèle en cire comprend l'injection d'une cire liquide dans un moule intermédiaire puis le durcissement de la cire et, avant l'injection de la cire liquide, la disposition du au moins un insert en céramique dans le moule intermédiaire de telle sorte que, après le durcissement de la cire, l'insert soit disposé autour d'au moins une portion du modèle de canal d'alimentation. De manière alternative, l'insert peut être disposé autour de la portion du modèle de canal d'alimentation après durcissement de la cire. Dans ce cas de figure, l'insert peut comprendre deux demi-coquilles disposées chacune de part et d'autre du canal d'alimentation et collées entre elles de manière à entourer ce dernier.

On comprend que le modèle en cire de la pièce présente une forme identique à la forme de la pièce métallique finale devant être obtenue à la fin du procédé de fabrication par fonderie à cire perdue. Ainsi, si la pièce à fabriquer est une aube de turbine par exemple, le modèle de pièce du modèle en cire aura la forme et les dimensions de cette aube de turbine. Par conséquent, les parois internes de la cavité de moulage du moule carapace formée autour du modèle de pièce, permettent de former une aube de turbine aux dimensions souhaitées, par coulée d'un métal liquide dans cette cavité de moulage.

De la même façon, le modèle de canal d'alimentation du modèle en cire présente la forme de la section de passage interne du canal d'alimentation du moule carapace, à travers laquelle le métal liquide pourra s'écouler jusqu'à la cavité de moulage, par exemple. Par conséquent, l'insert étant disposé autour d'au moins une portion du modèle de canal d'alimentation, le métal liquide s'écoulera également à l'intérieur de l'insert.

Plus précisément, lors de la mise en place des outillages, notamment du moule intermédiaire, permettant l'injection de la cire liquide et permettant la formation du modèle de canal d'alimentation, l'insert est disposé de telle sorte que, après solidification de la cire et démoulage du modèle en cire par démontage du moule intermédiaire, l'insert en céramique demeure autour de la portion du modèle de canal d'alimentation.

Le moule carapace est ensuite fabriqué autour du modèle en cire (après assemblage des différents modèles en cire de manière à former un modèle de grappe en cire), par trempage successif du modèle en cire dans une barbotine, afin d'obtenir un moule carapace en céramique. Lors de la fabrication du moule carapace par trempages, les couches successives du moule carapace sont formées autour du modèle en cire, mais également autour de l'insert déjà présent initialement et lui-même disposé autour du modèle en cire de canal d'alimentation. Par conséquent, à la fin de la fabrication du moule carapace, la paroi du canal d'alimentation présente une surépaisseur locale, induite par la présence de l'insert. Plus précisément, au niveau de la zone comprenant l'insert, la paroi du canal d'alimentation présente une épaisseur correspondant à l'épaisseur des couches formées par trempages successifs dans la barbotine, additionnée à l'épaisseur de l'insert en céramique autour duquel ces couches ont été formées.

Ainsi, à la fin du procédé de fabrication du moule carapace, l'insert en céramique se trouve noyé et intégré dans le moule carapace final, lui-même en céramique. Il est ainsi possible de disposer l'insert dans une zone souhaitée du canal d'alimentation, notamment une zone critique présentant une fragilité élevée, de telle sorte à augmenter localement l'épaisseur de céramique autour de cette zone critique du canal d'alimentation. Cela permet d'améliorer localement les propriétés mécaniques à haute température de la carapace céramique, et donc sa tenue aux efforts d'origine thermique et fluidique.

Dans certains modes de réalisation, l'insert comprend un corps présentant la forme d'une bague entourant le modèle de canal d'alimentation.

Dans certains modes de réalisation, une paroi interne du corps de l'insert présente une forme identique à la forme d'une paroi externe de la portion du modèle de canal d'alimentation autour de laquelle l'insert est disposé.

On comprend que le corps de l'insert présente une forme annulaire et s'étend autour d'un axe central de l'insert. Le corps de l'insert s'étend axialement, le long de l'axe central de l'insert, sur au moins une portion du modèle de canal d'alimentation, et autour de ce dernier. L'épaisseur du corps de l'insert correspond à sa dimension radiale, dans une direction perpendiculaire à l'axe central de l'insert, permettant d'obtenir la surépaisseur locale le long du canal d'alimentation dans le moule carapace finale. On comprend en outre que lorsque l'insert est disposé autour du modèle de canal d'alimentation, l'axe central de l'insert est confondu avec l'axe dudit modèle de canal d'alimentation. L'axe central de l'insert peut être droit, de telle sorte que le corps de l'insert présente une forme cylindrique, ou peut être courbé, de manière à suivre la courbure du canal d'alimentation. Cette forme de l'insert présente l'avantage d'être simple à mettre en œuvre.

Dans certains modes de réalisation, le corps de l'insert présente un diamètre interne égal au diamètre externe du modèle de canal d'alimentation destiné à former le canal d'alimentation du moule carapace.

En d'autres termes, après la fabrication du moule carapace et après élimination de la cire, le diamètre interne du corps de l'insert est égal au diamètre interne de la section de passage du canal d'alimentation. Cela permet de limiter la perturbation du métal liquide lors de son écoulement dans le canal d'alimentation.

Dans certains modes de réalisation, une longueur du corps de l'insert est sensiblement égale à la moitié d'une longueur du modèle de canal d'alimentation autour duquel est disposé l'insert.

On comprend par « longueur du corps de l'insert », sa longueur axiale le long de son axe central, en d'autres termes, le long de l'axe du modèle de canal d'alimentation. Lorsque le modèle de canal d'alimentation est courbe, l'axe central de l'insert étant par conséquent courbe également, la longueur curviligne de ce dernier est également sensiblement égale à la moitié d'une longueur du modèle de canal d'alimentation autour duquel est disposé l'insert. Cette caractéristique permet d'améliorer l'efficacité de l'insert.

Dans certains modes de réalisation, une paroi interne du corps de l'insert comprend un col. On comprend par « col », un rétrécissement de la section du corps de l'insert, le long de l'axe central de celui-ci. Par conséquent, le passage interne de l'insert présente une portion convergente suivie d'une portion divergente, le long de son axe central. La présence du col permet de mieux contrôler le flux de métal liquide lors du remplissage, en ralentissant le flux en bas du canal d'alimentation où les vitesses sont les plus élevées. De manière alternative, ou en complément du col, la paroi interne du corps de l'insert peut comprendre des perturbateurs, par exemple des excroissances destinées à perturber et ralentir l'alliage liquide lors du remplissage.

Dans certains modes de réalisation, l'insert comprend au moins un bourrelet d'ancrage annulaire disposé autour du corps de l'insert.

Selon cette configuration, la paroi externe de l'insert n'est pas plane, mais présente localement une excroissance, par la présence du bourrelet d'ancrage annulaire. Ce bourrelet d'ancrage peut présenter la forme d'une bride annulaire entourant le corps, en d'autres termes, s'étendant autour de l'axe central de celui-ci. Le bourrelet d'ancrage permet de limiter les déplacements de l'insert dans le moule carapace après enlèvement de la cire, et ainsi d'améliorer le positionnement et l'ancrage de l'insert dans le moule carapace.

Dans certains modes de réalisation, le bourrelet d'ancrage est disposé à une extrémité axiale du corps de l'insert.

Dans certains modes de réalisation, le bourrelet d'ancrage est disposé à une position intermédiaire entre deux extrémités axiales du corps de l'insert.

On entend par « extrémité axiale », une extrémité du corps de l'insert selon l'axe central de celui-ci. Lors de la fabrication de l'insert, la position axiale du bourrelet d'ancrage le long du corps de l'insert peut être déterminée en fonction de la configuration de la grappe, de manière à limiter la création de ponts de céramique lors de la fabrication de la carapace.

Dans certains modes de réalisation, le bourrelet d'ancrage présente une portion droite s'étendant radialement depuis le corps de l'insert, et une portion torique disposée autour de la portion droite.

On comprend que le terme « radialement » se réfère à une direction radiale, c'est-à-dire une direction perpendiculaire à l'axe central de l'insert. Ainsi, la portion torique est disposée radialement à l'extérieur de la portion droite, autour de celle-ci. On comprend également que, dans une vue perpendiculaire à un plan de section longitudinale de l'insert, parallèle à son axe central, la portion droite présente une forme sensiblement rectangulaire, et la portion torique présente une forme en arc de cercle, de diamètre supérieur à la largeur de la portion droite. La présence de la portion torique permet d'améliorer l'ancrage de l'insert dans la carapace.

Dans certains modes de réalisation, le bourrelet d'ancrage s'étend radialement depuis le corps de l'insert sur au moins 3 mm. Cette dimension permet d'améliorer l'ancrage de l'insert dans la carapace et son maintien en position après décirage.

Dans certains modes de réalisation, l'insert céramique est fabriqué par fabrication additive. Ce mode de fabrication permet d'envisager des profils d'insert de formes complexes, notamment la présence d'une portion torique sur le bourrelet d'ancrage, ou d'un col dans la section interne de l'insert.

Dans certains modes de réalisation, le moule carapace est destiné à la fabrication d'une grappe de pièces métalliques de turbomachine, le moule carapace étant axisymétrique autour d'un axe central et comprenant une pluralité de cavités de moulage destinées chacune au moulage de l'une des pièces métalliques, le canal d'alimentation comprenant un canal central d'alimentation descendant le long de l'axe central du moule et configuré pour recevoir à une extrémité supérieure le métal en fusion, et une pluralité de conduits d'alimentation en source mettant chacun une extrémité inférieure du canal central d'alimentation en communication fluidique avec une base de chacune des cavités de moulage, une pluralité d'inserts en céramique étant disposés dans le moule intermédiaire de telle sorte que, après le durcissement de la cire, chacun des inserts soit disposé autour d'au moins une portion d'un modèle de conduit d'alimentation en source destiné à former un des conduits d'alimentation en source du moule carapace.

Dans ce cas de figure, les conduits d'alimentation en source constituent les zones critiques nécessitant d'être renforcées, afin de limiter le risque de fissuration du moule carapace dans ces zones, lors de la coulée du métal liquide. De préférence, le moule carapace comprend autant d'inserts qu'il ne comprend de conduits d'alimentation en source. En d'autres termes, lors de la fabrication du modèle en cire, chaque modèle de conduit d'alimentation en source est entouré au moins en partie par un insert. Ainsi, après la fabrication du moule carapace en forme de grappe, les conduits d'alimentation en source du moule carapace présentent chacune une surépaisseur locale, compte tenu de la présence des inserts, permettant de renforcer la tenue mécanique et thermique du moule dans ces zones.

Dans certains modes de réalisation, une longueur du corps de l'insert est sensiblement égale à la moitié d'une longueur du modèle de conduit d'alimentation en source autour duquel est disposé l'insert.

Dans certains modes de réalisation, les conduits d'alimentation en source présentent une courbure, un axe central des inserts présentant une courbure identique à la courbure des conduits d'alimentation en source.

Le présent exposé concerne également un moule carapace destiné à la fabrication de pièce métallique de turbomachine, obtenu par un procédé selon l'un quelconque des modes de réalisation précédents.

Le présent exposé concerne également un procédé de fabrication de pièces métalliques de turbomachine utilisant un moule carapace obtenu par un procédé selon l'un quelconque des modes de réalisation précédents.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 est une vue latérale d'un moule carapace obtenu par un procédé de fonderie à cire perdue selon l'art antérieur,
[Fig. 2] La figure 2 est une demi-vue en coupe axiale du moule carapace de la figure 1,
[Fig. 3] La figure 3 est une vue en perspective d'une portion d'un modèle en cire permettant de former les conduits d'alimentation en source du moule carapace de la figure 1,
[Fig. 4] La figure 4 est une vue en perspective d'une portion d'un modèle en cire permettant de former les conduits d'alimentation en source d'un moule carapace selon un procédé conforme à l'invention,
[Fig. 5] La figure 5 est une vue en coupe axiale d'un modèle de conduit d'alimentation en source et d'un insert selon un premier exemple conforme à l'invention,
[Fig. 6] La figure 6 est une vue en coupe axiale d'un modèle de conduit d'alimentation en source et d'un insert selon un deuxième exemple conforme à l'invention,
[Fig. 7] La figure 7 est une vue en coupe axiale d'un modèle de conduit d'alimentation en source et d'un insert selon un troisième exemple conforme à l'invention,
[Fig. 8] La figure 8 est une vue en coupe axiale et en perspective d'un modèle de conduit d'alimentation en source et d'un insert selon un quatrième exemple conforme à l'invention,
[Fig. 9] La figure 9 est une demi-vue en coupe axiale d'une partie inférieure d'un moule carapace obtenu par un procédé conforme à l'invention,
[Fig. 10] La figure 10 représente schématiquement les étapes d'un procédé de fabrication d'un moule carapace et de pièces métalliques selon l'invention, par fonderie à cire perdue.

### Description des modes de réalisation

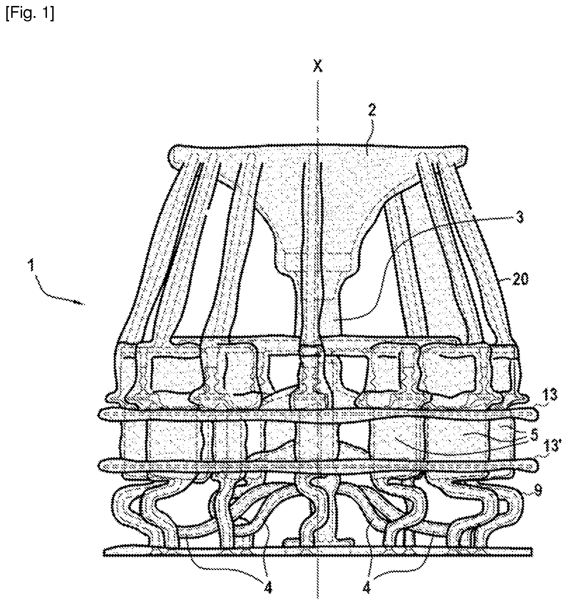

Dans la suite de l'exposé, les termes « haut », « bas » et leurs dérivés s'entendent suivant l'orientation du moule carapace dans l'espace pendant l'étape de coulée et illustré sur la figure 1, et selon le sens de coulée d'un métal liquide dans celui-ci, par gravité.

La figure 1 représente un exemple de moule carapace 1, nommé ci-après simplement « carapace 1 », en céramique, obtenu par un procédé conforme au présent exposé, et permettant de fabriquer par fonderie des pièces aéronautiques par grappes, par exemple des aubes fixes ou mobiles de turbine ou de compresseur.

La carapace 1, présentant la forme d'une grappe, comprend à son extrémité supérieure un godet d'alimentation 2, par l'intermédiaire duquel peut s'effectuer la coulée du métal liquide. Le godet d'alimentation 2 communique avec une extrémité supérieure d'un canal central d'alimentation 3 s'étendant verticalement le long d'un axe central X de la carapace 1. L'extrémité inférieure du canal central d'alimentation 3 communique avec une pluralité de conduits d'alimentation en source 4, répartis circonférentiellement autour de l'axe central X de la carapace 1, dans une partie basse de cette dernière. La carapace 1 comprend en outre une pluralité de cavités de moulage 5 réparties circonférentiellement autour de l'axe central X de la carapace 1. Chaque cavité de moulage 5 est destinée à former une pièce aéronautique en métal. On notera, sur la figure 1, que les cavités permettant le moulage des différentes pièces métalliques de la grappe sont représentées en traits interrompus dans la carapace 1.

Chacun des conduits d'alimentation en source 4 présente une forme incurvée, permettant de mettre en communication fluidique l'extrémité inférieure du canal central d'alimentation 3, avec une base 9 d'une des cavités de moulage 5. Ainsi, le fait de verser un métal liquide par le godet d'alimentation 2 permet, après coulée du métal liquide le long du canal central d'alimentation 3 et dans chacun des conduits d'alimentation en source 4, de remplir chacune des cavités de moulage 5 par le bas. La carapace 1 peut également comprendre un écran thermique supérieur 13 et inférieur 13', et des raidisseurs 20.

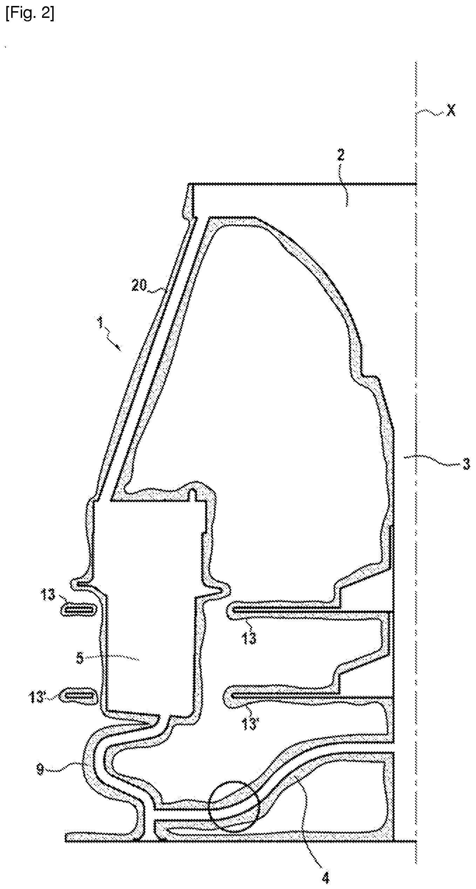

Les conduits d'alimentation en source 4, notamment les parties incurvées de ces derniers, constituent des zones fragiles de la carapace 1, susceptibles de se fissurer lors de la coulée du métal, et que le procédé selon le présent exposé permet de renforcer. Une telle zone fragile est représentée par un cercle sur la figure 2.

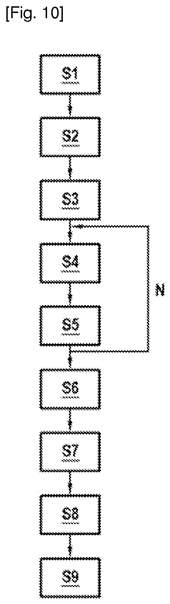

La suite de la description décrit un procédé de fabrication de la carapace 1 illustrée sur la figure 1, et de pièces métalliques aéronautiques à partir de cette carapace 1. Les différentes étapes de ce procédé sont illustrées sur la figure 10.

La première étape (étape S1) comprend la fabrication d'un modèle en cire, ou autre matériau équivalent à la cire et facilement éliminable par la suite, de la pièce. Le modèle en cire est appelé encore « grappe non permanente ». On notera que dans la suite de l'exposé, le terme « modèle en cire » désigne le modèle complet, sous forme de grappe permettant d'obtenir le moule carapace à l'étape suivante, étant entendu que ce modèle en cire résulte en fait de l'assemblage de plusieurs portions de modèle en cire, comme expliqué plus en détails dans la suite de la description. Dans une deuxième étape, le modèle en cire est trempé dans une première barbotine, la barbotine de contact (étape S2), comprenant des particules de poudre et un liant. Un sablage, autrement dit un dépôt de particules de sable appelé stucco de contact, est ensuite effectué, suivi d'un séchage de la couche obtenue (étape S3). Cette étape de sablage permet de renforcer la couche et de faciliter l'accrochage de la couche suivante.

La couche ainsi obtenue est ensuite trempée dans une deuxième barbotine, appelée barbotine de renfort (étape S4). Un dépôt de particules de sable appelé stucco de renfort, est alors effectué, suivi d'un séchage de la couche obtenue (étape S5). Les étapes S4 et S5 sont réitérées N fois, jusqu'à obtenir une épaisseur de moule carapace prédéterminée. Enfin, lorsque l'épaisseur souhaitée est atteinte, une étape de décirage, consistant à enlever le modèle en cire du modèle, puis de traitement thermique, est effectuée (étape S6). Cette élimination de la cire est réalisée en portant le moule carapace dans un four autoclave (ou autre) à une température supérieure à la température de fusion de la cire. Après élimination du modèle en cire, on obtient un moule carapace céramique dont la cavité reproduit en négatif tous les détails de la pièce à mouler.

Dans une étape suivante, on forme la grappe d'aubes métallique dans le moule carapace 1 en coulant du métal en fusion dans celui-ci, par le godet d'alimentation 2 (étape S7). Ensuite, après le refroidissement et la solidification du métal dans la carapace 1, la grappe est décochée de la carapace 1 (étape S8). Enfin, chacune des pièces aéronautiques métalliques est séparée du reste de la grappe et est finie par des procédés de parachèvement, par exemple des procédés d'usinage (étape S9).

La carapace 1 est formée à l'issue des étapes S1 à S6, et les pièces métalliques sont formées à l'issue des étapes S7 à S9. Les étapes S2 à S9, connues en soi, ne seront pas décrites plus en détails. Les documents FR3089438 et FR3031921 par exemple décrivent plus en détails ces différentes étapes.

L'invention s'intéresse plus spécifiquement à l'étape S1, comprenant la fabrication du modèle en cire.

La fabrication du modèle en cire comprend l'injection d'une cire à l'état liquide dans des outillages adaptés, c'est-à-dire des moules d'injection cire ci-après nommés moules intermédiaires (non illustrés), puis le démoulage de la cire de chacun de ces moules intermédiaires après solidification de la cire. Plus précisément, chaque moule intermédiaire présente une forme similaire à la forme d'une portion de la carapace 1 en céramique destinée à être fabriquée. Ainsi, après démoulage des portions de modèles en cire obtenues par chacun de ces moules intermédiaires, ces différentes portions de modèle en cire sont assemblées de manière à former le modèle en cire complet, c'est-à-dire sous forme de grappe permettant ensuite la fabrication du moule carapace. On notera que les moules intermédiaires présentent une température de fusion inférieure à celle de la carapace 1 destinée à être fabriquée. Ainsi, les moules intermédiaires peuvent être en métal.

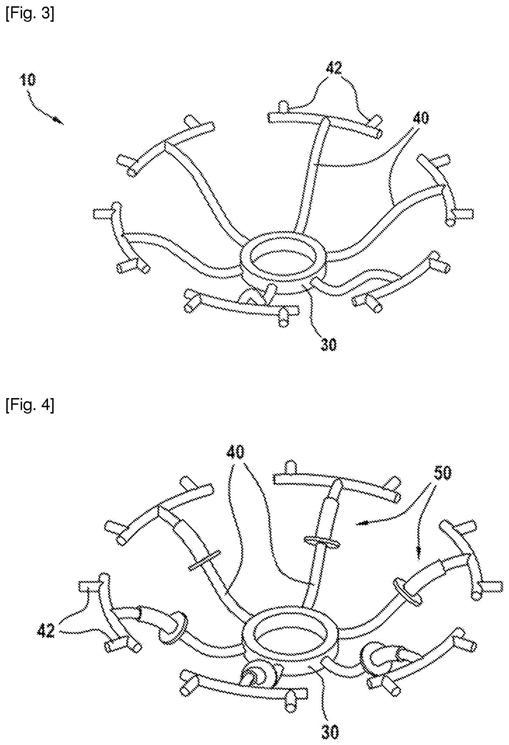

Un moule intermédiaire permet notamment d'obtenir le modèle en cire des conduits d'alimentation en source 4 représenté sur la figure 4. Ce moule intermédiaire comprend notamment des passages permettant le moulage des modèles en cire 40 des conduits d'alimentation en source 4, destinés à former les conduits d'alimentation en source 4. Ces passages comprennent en outre chacun un logement, dans lequel est disposé un insert 50 en céramique. Ces logements peuvent être par exemple formés dans le moule intermédiaire par usinage dans la carcasse du moule. Ces logements permettent le bon positionnement initial des inserts 50 et leur maintien en position durant le cycle d'injection. Chacun des inserts 50 est ainsi disposé dans ce moule intermédiaire de telle sorte que, après solidification de la cire et démoulage du modèle en cire du moule intermédiaire, les inserts 50 soient disposés autour des modèles 40 conduits d'alimentation en source 4.

La figure 3 représente une portion isolée 10 du modèle en cire après démoulage et avant assemblage, dans une configuration standard, sans la disposition d'inserts dans le moule intermédiaire avant injection de la cire. La portion isolée 10 du modèle en cire comprend un modèle 30 de l'extrémité inférieure du canal central d'alimentation 3, et un modèle 40 de la pluralité de conduits d'alimentation en source. Le modèle en cire comprend également des modèles de conduits de distribution 42, configurer pour former les conduits de distributions permettant de distribuer le métal liquide dans les différentes bases 9 de la carapace 1. La formation des couches de céramique autour des modèles 40, par trempages successifs dans la barbotine, permettra ainsi la formation de chacun des conduits d'alimentation en source 4.

La figure 4 représente une portion isolée du modèle en cire après démoulage du moule intermédiaire décrit ci-dessus, et avant assemblage de cette portion du modèle en cire avec les autres portions du modèle en cire pour obtenir la grappe en cire, dans une configuration selon le présent exposé, comprenant la disposition d'inserts 50 dans le moule intermédiaire avant injection de la cire. La portion isolée du modèle en cire comprend un modèle de l'extrémité inférieure du canal central d'alimentation 30, et un modèle 40 de la pluralité de conduits d'alimentation en source. Ainsi, après démoulage du modèle en cire, chaque insert 50 est emmanché dans un modèle 40 de conduit d'alimentation en source. La formation des couches de céramique à la fois autour des modèles 40 et des inserts 50, par trempages successifs dans la barbotine, permettra la formation des parois de chacun des conduits d'alimentation en source 4 englobant lesdits inserts 50.

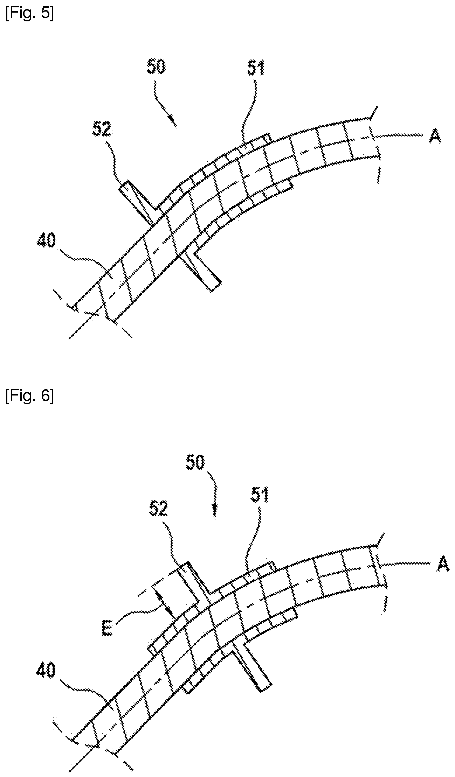

La figure 5 représente une vue en coupe d'un insert 50 seul, disposé autour d'un modèle 40 de conduit d'alimentation en source. L'insert 50 en céramique peut être obtenu par fabrication additive, et comprend un corps 51 de forme sensiblement cylindrique, s'étendant autour d'un axe central A. L'axe central A présente une courbure correspondant à la courbure du modèle 40 de conduit d'alimentation en source, autour duquel l'insert 50 est destiné à être disposé après démoulage du modèle en cire. On notera que les figures sont présentées à titre illustratif, et ne sont pas nécessairement représentatives des dimensions réelles des pièces. Ainsi, de préférence, l'insert 50 présente une longueur curviligne, le long de l'axe central A, sensiblement égale à la moitié de la longueur du modèle 40 de conduit d'alimentation en source. En outre, une épaisseur radiale du corps 51, c'est-à-dire dans une direction perpendiculaire à l'axe central A, est comprise entre 5 et 20 % du diamètre de la section de passage du conduit d'alimentation en source 4. Par exemple, pour un conduit d'alimentation en source 4 dont la section de passage présente un diamètre compris entre 5 et 10 mm, l'épaisseur radiale du corps 51 est comprise entre 0,5 et 1 mm.

L'insert 50 comprend un bourrelet d'ancrage annulaire 52 disposé autour du corps 51. Le bourrelet d'ancrage 52 présente la forme d'une bride de section rectangulaire, s'étendant radialement sur une longueur E au moins égale à 3 mm depuis le corps 51. La figure 5 présente un exemple dans lequel le bourrelet d'ancrage 52 est disposé à une extrémité axiale du corps 51 de l'insert 50. La figure 6 présente un exemple alternatif dans lequel le bourrelet d'ancrage 52 est disposé sur une section axiale intermédiaire du corps 51, entre les deux extrémités axiales de celui-ci, notamment à une distance sensiblement égale des deux extrémités axiales.

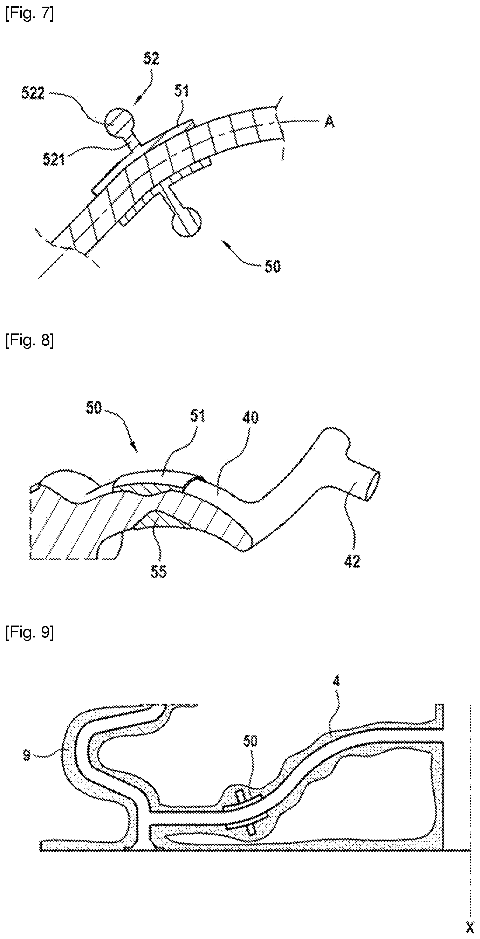

La figure 7 illustre un exemple modifié d'un insert 50 conforme au présent exposé, dans lequel le bourrelet d'ancrage 52 comprend une portion droite 521 disposée autour du corps 51 et s'étendant radialement depuis ce dernier, et une portion torique 522 disposée autour de la portion droite 521. Le diamètre de la portion torique 522 est supérieur à l'épaisseur axiale de la portion droite. La portion torique 522 permet ainsi d'améliorer l'ancrage.

On notera que le dimensionnement et le positionnement du bourrelet d'ancrage 52 peut être effectué selon la configuration de la grappe, afin d'éviter la création de ponts de céramique dans la carapace 1, qui seraient néfastes à la bonne gestion de la thermique lors de la solidification. En particulier, le dimensionnement et le positionnement du bourrelet d'ancrage 52 sont de préférence tels que deux surfaces de la grappe non moulée doivent être séparées d'au minimum deux à trois fois l'épaisseur de la carapace.

La figure 8 illustre un autre exemple modifié d'un insert 50 conforme au présent exposé. Bien que l'insert 50 soit représenté sans bourrelet d'ancrage 52 pour simplifier la description, l'insert 50 selon cet exemple peut néanmoins comprendre un bourrelet d'ancrage 52 similaire aux exemples précités. Selon cet exemple, une paroi interne du corps 51 de l'insert 50 présente un col 55, correspondant à une réduction locale de la section de passage de l'insert 50. On comprend que la présence de ce col 55 engendre également, à l'issue de la fabrication de la carapace 1, une réduction de la section de passage des conduits d'alimentation en source 4 et ainsi, la présence d'une portion convergente puis d'une portion divergente dans ces conduits.

A la fin de l'étape S1, c'est-à-dire après démoulage du modèle en cire du moule intermédiaire, chacun des modèles 40 des conduits d'alimentation en source est entouré par un insert 50 présentant l'une des configurations décrites dans les exemples ci-dessus, ou une combinaison de ces configurations. A la fin des étapes S2 à S6 de fabrication de la carapace 1, en particulier après élimination de la cire, les inserts sont intégrés dans la carapace 1, notamment dans les conduits d'alimentation en source 4. Ils engendrent ainsi une surépaisseur au niveau des portions courbées des conduits d'alimentation en source 4. Cette configuration est visible sur la figure 9, illustrant la présence d'une surépaisseur le long d'un conduit d'alimentation en source 4, due à la présence de l'insert 50 en céramique, contrairement à la configuration illustré sur la figure 2, dans laquelle un insert n'est pas disposé.

On notera qu'un jeu de l'ordre du dixième de millimètre peut être présent entre l'insert 50 et la carapace 1 après enlèvement de la cire. Ce jeu n'affecte toutefois pas les performances ni le positionnement de l'insert 50 dans les conduits d'alimentation en source 4. Au contraire, les mouvements de l'insert 50 induits lors du passage du métal liquide peuvent contribuer au ralentissement du flux, ce qui est bénéfique pour le remplissage des cavités de moulage 5. Ce jeu joue également un rôle d'isolant thermique pendant la phase de préchauffage.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Procédé de fabrication d'un moule carapace (1) destiné à la fabrication par fonderie à cire perdue d'au moins une pièce métallique, le moule carapace (1) comprenant au moins une cavité de moulage (5) destinée au moulage de la pièce métallique, et au moins un canal d'alimentation (4) destiné à amener un métal liquide vers la cavité de moulage (5), le procédé comprenant :
- la fabrication d'un modèle en cire comprenant un modèle de pièce destiné à former la cavité de moulage (5) et un modèle (40) de canal d'alimentation destiné à former le canal d'alimentation (4),
- la disposition d'au moins un insert (50) en céramique autour d'au moins une portion du modèle (40) de canal d'alimentation,
- la fabrication du moule carapace (1) autour du modèle en cire.

2. Procédé selon la revendication 1, dans lequel la fabrication du modèle en cire comprend l'injection d'une cire liquide dans un moule intermédiaire puis le durcissement de la cire et, avant l'injection de la cire liquide, la disposition du au moins un insert (50) en céramique dans le moule intermédiaire de telle sorte que, après le durcissement de la cire, l'insert (50) soit disposé autour d'au moins une portion du modèle (40) de canal d'alimentation.

3. Procédé selon la revendication 1 ou 2, dans lequel l'insert (50) comprend un corps (51) présentant la forme d'une bague entourant le modèle (40) de canal d'alimentation.

4. Procédé selon la revendication 3, dans lequel le corps (51) de l'insert (50) présente un diamètre interne égal au diamètre externe du modèle (40) de canal d'alimentation destiné à former le canal d'alimentation (4) du moule carapace (1).

5. Procédé selon la revendication 3 ou 4, dans lequel une longueur axiale du corps (51) de l'insert (50) est sensiblement égale à la moitié d'une longueur axiale du modèle (40) de canal d'alimentation autour duquel est disposé l'insert (50), le long d'un axe central du modèle (40) de canal d'alimentation.

6. Procédé selon l'une quelconque des revendications 3 à 5, dans lequel une paroi interne du corps (51) de l'insert (50) comprend un col (55).

7. Procédé selon l'une quelconque des revendications 3 à 6, dans lequel l'insert (50) comprend au moins un bourrelet d'ancrage (52) annulaire disposé autour du corps (51) de l'insert.

8. Procédé selon la revendication 7, dans lequel le bourrelet d'ancrage (52) est disposé à une extrémité axiale du corps (51) de l'insert, ou à une position intermédiaire entre deux extrémités axiales du corps de l'insert.

9. Procédé selon la revendication 7 ou 8, dans lequel le bourrelet d'ancrage (52) présente une portion droite (521) s'étendant radialement depuis le corps (51) de l'insert (50), et une portion torique (522) disposée autour de la portion droite (521).

10. Procédé selon l'une quelconque des revendications 7 à 9, dans lequel le bourrelet d'ancrage (52) s'étend radialement depuis le corps (51) de l'insert (50) sur au moins 3 mm.

11. Procédé selon l'une quelconque des revendications 1 à 10, dans lequel l'insert céramique est fabriqué par fabrication additive.

12. Procédé selon l'une quelconque des revendications 1 à 11, dans lequel le moule carapace (1) est destiné à la fabrication d'une grappe de pièces métalliques de turbomachine, le moule carapace étant axisymétrique autour d'un axe central (X) et comprenant une pluralité de cavités de moulage (5) destinées chacune au moulage de l'une des pièces métalliques, le canal d'alimentation comprenant un canal central d'alimentation (3) descendant le long de l'axe central (X) du moule et configuré pour recevoir à une extrémité supérieure le métal en fusion, et une pluralité de conduits d'alimentation en source (4) mettant chacun une extrémité inférieure du canal central d'alimentation (3) en communication fluidique avec une base (9) de chacune des cavités de moulage (5), une pluralité d'inserts (50) en céramique étant disposés dans le moule intermédiaire de telle sorte que, après le durcissement de la cire, chacun des inserts (50) soit disposé autour d'au moins une portion d'un modèle (40) de conduits d'alimentation en source autour duquel est destiné à être formé un des conduits d'alimentation en source (4) du moule carapace (1).

13. Moule carapace (1) destiné à la fabrication de pièce métallique de turbomachine, obtenu par un procédé selon l'une quelconque des revendications précédentes.

14. Procédé de fabrication de pièces métalliques de turbomachine utilisant un moule carapace (1) obtenu par un procédé selon l'une quelconque des revendications 1 à 12.

## Patentansprüche

1. Verfahren zur Herstellung einer Schalenform (1), die ausgelegt ist zur Herstellung durch Wachsverlustguss mindestens einer Metallkomponente, wobei die Schalenform (1) mindestens einen Formhohlraum (5) umfasst, der ausgelegt ist zum Gießen der Metallkomponente, und mindestens einen Versorgungskanal (4), der ausgelegt ist, um ein flüssiges Metall hin zu dem Formhohlraum (5) zu leiten, wobei das Verfahren Folgendes umfasst:
- die Herstellung eines Wachsmodells, umfassend ein Komponentenmodell, das ausgelegt ist, um den Formhohlraum (5) zu bilden, und ein Modell (40) des Versorgungskanals, das ausgelegt ist, um den Versorgungskanal (4) zu bilden,
- die Anordnung mindestens eines Einsatzes (50) aus Keramik um mindestens einen Abschnitt des Modells (40) des Versorgungskanals herum,
- die Herstellung der Schalenform (1) um das Wachsmodell herum.

2. Verfahren nach Anspruch 1, wobei die Herstellung des Wachsmodells das Injizieren eines flüssigen Wachses in eine Zwischenform, dann das Aushärten des Wachses und, vor dem Injizieren des flüssigen Wachses, das Anordnen des mindestens einen Einsatzes (50) aus Keramik in der Zwischenform umfasst, derart, dass nach dem Aushärten des Wachses der Einsatz (50) um mindestens einen Abschnitt des Modells (40) des Versorgungskanals herum angeordnet ist.

3. Verfahren nach Anspruch 1 oder 2, wobei der Einsatz (50) einen Körper (51) umfasst, der die Form eines Rings aufweist, der das Modell (40) des Versorgungskanals umgibt.

4. Verfahren nach Anspruch 3, wobei der Körper (51) des Einsatzes (50) einen Innendurchmesser aufweist, der gleich dem Außendurchmesser des Modells (40) des Versorgungskanals ist, der ausgelegt ist, um den Versorgungskanal (4) der Schalenform (1) zu bilden.

5. Verfahren nach Anspruch 3 oder 4, wobei eine axiale Länge des Körpers (51) des Einsatzes (50) im Wesentlichen gleich der Hälfte einer axialen Länge des Modells (40) des Versorgungskanals ist, um den herum der Einsatz (50) angeordnet ist, entlang einer zentralen Achse des Modells (40) des Versorgungskanals.

6. Verfahren nach einem der Ansprüche 3 bis 5, wobei die Innenwand des Körpers (51) des Einsatzes (50) einen Kragen (55) umfasst.

7. Verfahren nach einem der Ansprüche 3 bis 6, wobei der Einsatz (50) mindestens einen ringförmigen Verankerungswulst (52) umfasst, der um den Körper (51) des Einsatzes herum angeordnet ist.

8. Verfahren nach Anspruch 7, wobei der Verankerungswulst (52) an einem axialen Ende des Körpers (51) des Einsatzes oder an einer Zwischenposition zwischen zwei axialen Enden des Körpers des Einsatzes angeordnet ist.

9. Verfahren nach Anspruch 7 oder 8, wobei der Verankerungswulst (52) einen geraden Abschnitt (521) aufweist, der sich radial von dem Körper (51) des Einsatzes (50) erstreckt, und einen torischen Abschnitt (522), der um den rechten Abschnitt (521) angeordnet ist.

10. Verfahren nach einem der Ansprüche 7 bis 9, wobei sich der Verankerungswulst (52) radial von dem Körper (51) des Einsatzes (50) auf mindestens 3 mm erstreckt.

11. Verfahren nach einem der Ansprüche 1 bis 10, wobei der keramische Einsatz durch additive Fertigung hergestellt ist.

12. Verfahren nach einem der Ansprüche 1 bis 11, wobei die Schalenform (1) ausgelegt ist zur Herstellung eines Clusters von Metallkomponenten einer Turbomaschine, wobei die Schalenform achsensymmetrisch um eine zentrale Achse (X) ist und eine Vielzahl von Formhohlräumen (5) umfasst, die jede zum Gießen eines der Metallkomponenten ausgelegt sind, wobei der Versorgungskanal einen zentralen Versorgungskanal (3) umfasst, der entlang der zentralen Achse (X) der Form abfällt und konfiguriert ist, um an einem oberen Ende das Fusionsmetall aufzunehmen, und eine Vielzahl von Versorgungsleitungen an der Quelle (4), die jeweils ein unteres Ende des zentralen Versorgungskanals (3) in fluidische Kommunikation mit einer Basis (9) jedes der Formhohlräume (5) bringen, wobei eine Vielzahl von Einsätzen (50) aus Keramik in der Zwischenform derart angeordnet sind, dass, nach dem Aushärten des Wachses, jeder der Einsätze (50) um mindestens einen Abschnitt eines Modells (40) von Quellversorgungsleitungen herum angeordnet sind, um die herum vorgesehen ist, dass einer der Quellversorgungskanäle (4) der Schalenform (1) gebildet wird.

13. Schalenform (1), die ausgelegt ist zur Herstellung einer Metallkomponente, erhalten durch ein Verfahren nach einem der vorhergehenden Ansprüche.

14. Verfahren zur Herstellung von Metallkomponenten einer Turbomaschine unter Verwendung einer Schalenform (1), erhalten durch ein Verfahren nach einem der Ansprüche 1 bis 12.

## Claims

1. A method for manufacturing a shell mold (1) intended for manufacturing at least one metal part by lost-wax casting, the shell mold (1) comprising at least one molding cavity (5) intended for molding the metal part, and at least one feed channel (4) intended to convey a liquid metal to the molding cavity (5), the method comprising:
- manufacturing a wax pattern comprising a part pattern intended to form the molding cavity (5) and a feed channel pattern (40) intended to form the feed channel (4),
- arranging at least one ceramic insert (50) around at least one portion of the feed channel pattern (40),
- manufacturing the shell mold (1) around the wax pattern.

2. The method as claimed in claim 1, in which manufacturing the wax pattern comprises injecting a liquid wax into an intermediate mold and then hardening the wax and, before injecting the liquid wax, arranging the at least one ceramic insert (50) in the intermediate mold such that, after the wax has hardened, the insert (50) is arranged around at least a portion of the feed channel pattern (40).

3. The method as claimed in claim 1 or 2, in which the insert (50) comprises a body (51) in the form of a ring surrounding the feed channel pattern (40).

4. The method as claimed in claim 3, in which the body (51) of the insert (50) has an inner diameter equal to the outer diameter of the feed channel pattern (40) intended to form the feed channel (4) of the shell mold (1).

5. The method as claimed in claim 3 or 4, in which the axial length of the body (51) of the insert (50) is substantially equal to half the axial length of the feed channel pattern (40) around which the insert (50) is arranged, along a central axis of the feed channel pattern (40).

6. The method as claimed in any one of claims 3 to 5, in which an inner wall of the body (51) of the insert (50) comprises a neck (55).

7. The method as claimed in any one of claims 3 to 6, in which the insert (50) comprises at least one annular anchoring bead (52) arranged around the body (51) of the insert.

8. The method as claimed in claim 7, in which the anchoring bead (52) is arranged at an axial end of the body (51) of the insert, or in an intermediate position between two axial ends of the body of the insert.

9. The method as claimed in claim 7 or 8, in which the anchoring bead (52) has a straight portion (521) extending radially from the body (51) of the insert (50), and a toroidal portion (522) arranged around the straight portion (521).

10. The method as claimed in any one of claims 7 to 9, in which the anchoring bead (52) extends radially from the body (51) of the insert (50) by at least 3 mm.

11. The method as claimed in any one of claims 1 to 10, in which the ceramic insert is manufactured by additive manufacturing.

12. The method as claimed in any one of claims 1 to 11, in which the shell mold (1) is intended for manufacturing a cluster of metal turbomachine parts, the shell mold being axisymmetric about a central axis (X) and comprising a plurality of molding cavities (5) each intended to mold one of the metal parts, the feed channel comprising a central feed channel (3) descending along the central axis (X) of the mold and configured to receive molten metal at a top end, and a plurality of source feed ducts (4) each bringing a bottom end of the central feed channel (3) into fluid communication with a base (9) of each of the molding cavities (5), a plurality of ceramic inserts (50) being arranged in the intermediate mold such that, after the wax has hardened, each of the inserts (50) is arranged around at least a portion of a source feed duct pattern (40) around which one of the source feed ducts (4) of the shell mold (1) is intended to be formed.

13. A shell mold (1) intended for manufacturing a metal turbomachine part, obtained by a method as claimed in any one of the preceding claims.

14. A method for manufacturing metal turbomachine parts using a shell mold (1) obtained by a method as claimed in any one of claims 1 to 12.
